# EUROPÄISCHE PATENTSCHRIFT

(11) **EP 0 767 193 B1**
(45) Veröffentlichungstag und Bekanntmachung des Hinweises auf die Patenterteilung: **08.07.1998**
(21) Anmeldenummer: 96115000.0
(22) Anmeldetag: 19.09.1996
(51) Int. Cl.: C08J 3/03

(54) **Wässrige Organopolysiloxanemulsionen sowie Emulgatoren zu deren Herstellung**
Aqueous organopolysiloxane emulsions and emulsifying agents for their preparation
Emulsions aqueuses d'organopolysiloxanes et agents émulsifiants pour leur fabrication

(30) Priorität: 21.09.1995 DE 19535005
(43) Veröffentlichungstag der Anmeldung: 09.04.1997
(73) Patentinhaber: WACKER-CHEMIE GMBH, D-81737 München (DE)
(72) Erfinder: Funk, Enno, Dr., 84561 Mehring (DE); Kürmeier, Christine, 84335 Mitterskirchen (DE)
(74) Vertreter: Budczinski, Angelika

(56) Entgegenhaltungen:
- EP-A- 0 253 747
- EP-A- 0 350 413
- EP-A- 0 484 001
- WO-A-92/19671
- CA-A- 1 246 270
- GB-A- 2 016 494

## Beschreibung

Die Erfindung betrifft wäßrige Organopolysiloxanemulsionen, insbesondere solche, die durch Anlagerung von Si-gebundenem Wasserstoff an aliphatische Mehrfachbindung vernetzbar sind, deren Herstellung mit einer Emulgatorkombination sowie deren Verwendung zur Herstellung klebstoffabweisender Beschichtungen.

Organopolysiloxane sind von großem Interesse für die klebstoffabweisende Beschichtung einer Vielzahl von Substraten, wie beispielsweise Papier, Polyethylen-kaschiertem Papier oder Polyesterfolie. Besondere Bedeutung haben Organopolysiloxane bei der Herstellung von sogenannen "release-linern" für Haftverbunde, insbesondere für Selbstklebeetiketten und für die Herstellung von Klebebändern, erlangt. Hinsichtlich des Vulkanisationssystems haben sich meist additionsvernetzende Organopolysiloxane gegenüber kondensationsvernetzenden durchgesetzt.

Wäßrige Organopolysiloxanemulsionen können aufgrund ihrer niedrigen Viskosität auf relativ einfachen und daher preisgünstigen Beschichtungsmaschinen, wie z.B. mittels Gravurwalze, Leimpresse oder Rakel, verarbeitet werden. Dieser Vorteil besteht im allgemeinen unabhängig von der Viskosität der Ölphase, welche über einen weiten Bereich variiert werden kann. Im Gegensatz zu den Lösungen von Organopolysiloxanen und organischen Lösungsmitteln ist die äußere Phase wäßriger Organopolysiloxanemulsionen toxikologisch unbedenklich, unbrennbar und umweltneutral. Für die Herstellung, Stabilität und Verarbeitungseigenschaften wäßriger Organopolysiloxanemulsionen ist die Wahl geeigneter Emulgatoren von ausschlaggebender Bedeutung. So wird u.a. die Verlaufseigenschaft der anwendungsfertigen Formulierung auf dem betreffenden Substrat und die Verankerung der Siliconschicht nach der Vulkanisation durch den Emulgator entscheidend beeinflußt. Art und Menge des Emulgators wirken sich auch auf das Trennkraftniveau gegenüber Adhäsiven aus.

Beispielsweise werden in EP-A 117 607 Siloxan-Polyvinylalkohol-Zusammensetzungen beschrieben, wobei Polyvinylalkohol (PVA) mit einer Verseifungszahl von 88 Mol-% bevorzugt wird. Eine hohe PVA Konzentration bewirkt hier hohe Trennkräfte. In EP-B 385 342 wird eine Verbesserung von Glanz, wasserabstoßender Eigenschaft und Trennkraft der ausgehärteten Siliconschicht gefunden, wenn als Emulgator ein Polyvinylalkohol mit einem Hydrolysegrad von mindestens 90 Mol-% eingesetzt wird.

Organopolysiloxanemulsionen mit Emulgatorkombinationen, welche u.a. PVA und Alkylphenylpolyglykolether umfassen, sind bereits bekannt, wobei der Hydrolysegrad der beschriebenen Polyvinylalkohole mindestens 85 Mol-% beträgt. Hierzu sei beispielsweise auf CA-A 1246270 (General Electric Co.; ausgegeben am 6.12.1988), US-A 5,095,067, US-A 5,104,927, EP-A 484 001, USA 4,791,029, DE-B 26 01 159 und US-A 3,900,617 verwiesen.

Bekannt sind ferner kondensationsvernetzende Organopolysiloxanemulsionen, wie in US-A 4,624,900 beschrieben, welche Polyvinylalkohol mit einem Hydrolysegrad größer 85 Mol-% und Alkylphenylpolyglykolether enthalten. In US-A 4,190,688 wird ein additions- bzw. kondensationsvernetzbares Hybridsystem beschrieben, wobei der nicht näher spezifizierte Polyvinylalkohol und der Alkylphenylpolyglykolether getrennt für die Emulgierung der Katalysatorkomponente einerseits und der Vernetzerkomponente andererseits eingesetzt werden.

Der Begriff "Organopolysiloxane" soll im Rahmen dieser Erfindung sowohl polymere als auch oligomere und dimere Organosiloxane sowie Copolymere aus Organosiloxanblöcken und Kohlenwasserstoffblöcken umfassen.

Gegenstand der Erfindung sind Zusammensetzungen enthaltend Alkylphenylpolyglykolether sowie Polyvinylalkohol mit einem Verseifungsgrad von maximal 85 Mol-% und mit einem Molekulargewicht von 2 000 bis 500 000 g/mol.

Polyvinylalkohol wird üblicherweise durch Verseifung (Hydrolyse) bzw. Teilverseifung von Polyvinylacetat hergestellt. Der Hydrolysegrad gibt an, wieviel Mol-% der ursprünglich vorhandenen Acetatgruppen verseift worden sind. Die Differenz zu 100 % bezeichnet den molaren Anteil der im Polyvinylalkohol verbliebenen Acetatgruppen in Prozent.

Bei dem in den erfindungsgemäßen Zusammensetzungen enthaltenen Polyvinylalkohol handelt es sich bevorzugt um solchen mit einem Verseifungsgrad zwischen 65 und 85 Mol-%, besonders bevorzugt mit einem Verseifungsgrad zwischen 70 und 80 Mol-%, insbesondere zwischen 75 und 79 Mol-%.

Bevorzugt hat der erfindungsgemäß eingesetzte Polyvinylalkohol mit niederem Verseifungsgrad ein Molekulargewicht von 5 000 bis 100 000 g/mol.

Das Molekulargewicht wird dabei durch Gelpermeationschromatographie und Laserlichtstreuung bestimmt, wie z.B. in D.J. Nagy, International Microscopy Laboratory: Vol 6, March 1995, Seite 6 bis 11 beschrieben.

Bei dem in der erfindungsgemäßen Zusammensetzung enthaltenen Polyvinylalkohol mit niederem Verseifungsgrad kann es sich um eine Art wie auch um ein Gemisch aus mindestens zwei Arten von Polyvinylalkoholen handeln.

Polyvinylalkohol mit niederem Verseifungsgrad sind handelsübliche Produkte bzw. können nach in der organischen Chemie bekannten Verfahren hergestellt werden.

Bei dem in der erfindungsgemäßen Zusammensetzung eingesetzten Alkylphenylpolyglykolether handelt es sich bevorzugt um eine Verbindung der allgemeinen Formel

R-(C₆H₄)-O(CH₂CH₂O)ₓH (I),

worin
- R: die Bedeutung von Alkylrest mit 4 bis 15 Kohlenstoffatomen hat und
- x: eine ganze Zahl von 5 bis 30, bevorzugt 10 bis 20, darstellt und
die Phenylgruppe -(C₆H₄)- ortho-, meta- oder para-substituiert sein kann.

Bevorzugt handelt es sich bei Rest R um lineare Alkylreste mit 4 bis 15 Kohlenstoffatomen, besonders bevorzugt um den n-Octyl- und den n-Nonylrest, insbesondere um den n-Nonylrest.

Beispiele für Reste R sind 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Pentadecylreste, wie der n-Pentadecylrest, sowie Cycloalkylreste, wie Cyclopentyl-, Cyclohexyl-, Cycloheptylreste und Methylcyclohexylreste.

Beispiele für die erfindungsgemäß eingesetzten Alkylphenylpolyglykolether sind n-Nonylphenylpolyglykolether mit durchschnittlich 15 Glykoleinheiten, n-Nonylphenylpolyglykolether mit durchschnittlich 20 Glykoleinheiten, n-Pentadecylphenylpolyglykolether mit durchschnittlich 25 Glykoleinheiten und n-Octylphenylpolyglykolether mit durchschnittlich 10 Glykoleinheiten, wobei n-Nonylphenylpolyglykolether mit durchschnittlich 15 Glykoleinheiten besonders bevorzugt ist.

Bei dem in der erfindungsgemäßen Zusammensetzung enthaltenen Alkylphenylpolyglykolether kann es sich um eine Art wie auch um ein Gemisch aus mindestens zwei Arten von Alkylphenylpolyglykolethern handeln.

Alkylphenylpolyglykolether sind handelsübliche Produkte bzw. können nach in der organischen Chemie bekannten Verfahren hergestellt werden.

Die erfindungsgemäßen Zusammensetzungen enthalten Polyvinylalkohol mit niederem Verseifungsgrad und Alkylphenylpolyglykolether im Gewichtsverhältnis von vorzugsweise 3:1 bis 6:1, besonders bevorzugt von 4:1 bis 5,5:1.

Die erfindungsgemäßen Zusammensetzungen können weitere Stoffe, wie Wasser, niedermolekulare Alkohole, wie beispielsweise Hexanol, oder niedermolekulare Glykole, wie z.B. Ethylenglykol, Propylenglykol, Diethylenglykol und Triethylenglykol, enthalten, wobei sie darüberhinaus vorzugsweise keine weiteren Stoffe aufweisen.

Bevorzugt werden die erfindungsgemäßen Zusammensetzungen als Emulgatorkombination eingesetzt.

Ein weiterer Gegenstand der vorliegenden Erfindung sind wäßrige Emusionen auf der Basis von Organopolysiloxanen, dadurch gekennzeichnet, daß sie als Emulgator die erfindungsgemäßen Zusammensetzungen enthalten.

Die erfindungsgemäßen wäßrigen Emulsionen auf der Basis von Organopolysiloxanen enthalten dabei die erfindungsgemäßen Zusammensetzungen vorzugsweise in einer solchen Menge, daß bezogen auf 100 Gewichtsteile Organopolysiloxane (Ölphase) 2 bis 25 Gewichtsteile, besonders bevorzugt 3 bis 10 Gewichtsteile, Polyvinylalkohol mit niederem Verseifungsgrad und 0,1 bis 2 Gewichtsteile, besonders bevorzugt 0,5 bis 1,5 Gewichtsteile, Alkylphenylpolyglykolether anwesend sind.

Die erfindungsgemäßen wäßrigen Emulsionen auf der Basis von Organopolysiloxanen haben den Vorteil, daß sie zu beschichtende Substrate, wie z.B. Papier, Kunststoffolien, Gewebe, Feingewebe oder Textilien, hervorragend benetzen, imprägnieren und darauf abriebfest verankern.

Bei den erfindungsgemäßen Emulsionen kann es sich um beliebige, bisher bekannte Emulsionen auf der Basis von Organopolysiloxanen handeln.

Bevorzugt handelt es sich bei den erfindungsgemäßen Emulsionen auf der Basis von Organopolysiloxanen um solche vom Ölin-Wasser-Typ.

Besonders bevorzugt handelt es sich bei den erfindungsgemäßen wäßrigen Emulsionen um solche, die durch Anlagerung von Si-gebundenem Wasserstoff an aliphatische Mehrfachbindung vernetzbar sind, enthaltend
(A) Organopolysiloxane, die Reste mit aliphatischen Kohlenstoff-Kohlenstoff-Mehrfachbindungen aufweisen,
(B) Organopolysiloxane mit Si-gebundenen Wasserstoffatomen oder anstelle von (A) und (B)
(C) Organopolysiloxane, die Reste mit aliphatischen Kohlenstoff-Kohlenstoff-Mehrfachbindungen und Si-gebundene Wasserstoffatome aufweisen, und
(D) die Anlagerung von Si-gebundenem Wasserstoff an aliphatische Mehrfachbindung fördernden Katalysator,
(E) erfindungsgemäße Emulgatorkombination sowie gegebenenfalls
(F) Inhibitor.

Bei den zur Herstellung der erfindungsgemäßen Emulsionen eingesetzten Bestandteilen (A), (B), (C), (D) und (F) kann es sich um die gleichen handeln, die auch in bisher bekannten, durch Anlagerung von Si-gebundenem Wasserstoff an aliphatische Mehrfachbindung vernetzbaren Massen eingesetzt worden sind. Hierzu sei beispielsweise auf die deutsche Anmeldung mit dem Aktenzeichen DE-A-44 23 195 (Wacker-Chemie GmbH; angemeldet am 1.7.1994) bzw. der entsprechenden US-A-5496961 verwiesen.

Bei den einzelnen zur Herstellung der erfindungsgemäßen Massen eingesetzten Komponenten kann es sich jeweils um eine einzige Art einer solchen Komponente, wie auch um ein Gemisch aus mindestens zwei verschiedenen Arten einer derartigen Komponente handeln.

Da die erfindungsgemäße, durch Polyaddition vernetzbare Emulsion im allgemeinen eine begrenzte Topfzeit hat, erfolgt die Herstellung und Lagerung einer wäßrigen Organopolysiloxanemulsion vorteilhafterweise in Form zweier verschiedener Emulsionskomponenten, wobei unter Topfzeit die Zeit zu verstehen ist, während der eine vollständige Aushärtung der Emulsion gewährleistet ist. So können die beiden Emulsionskomponenten der erfindungsgemäßen vernetzbaren Emulsion alle Bestandteile in beliebigen Kombinationen und Mengenverhältnissen enthalten, mit der Maßgabe, daß eine Komponente nicht gleichzeitig die Bestandteile (A), (B) und (D) bzw. (C) und (D) enthält. Bevorzugt liegen in den Ölphasen dieser Komponenten Bestandteil (B) und (D) jeweils getrennt voneinander vor. Besonders bevorzugt enthält die Ölphase der im folgenden "Vernetzerkomponente" genannten Emulsionskomponente ein Gemisch aus Bestandteil (A), (B) und gegebenenfalls (F), wobei die Ölphase der im folgenden "Katalysatorkomponente" genannten Emulsionskomponente ein Gemisch aus Bestandteil (A) und (D) enthält.

Als Organopolysiloxane (A), die SiC-gebundene Reste mit aliphatischen Kohlenstoff-Kohlenstoff-Mehrfachbindungen aufweisen, werden vorzugsweise lineare oder verzweigte Organopolysiloxane aus Einheiten der Formel 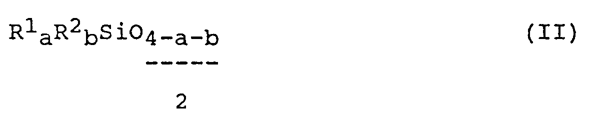 eingesetzt, wobei
- R¹: einen einwertigen, SiC-gebundenen, von aliphatischen Kohlenstoff-Kohlenstoff-Mehrfachbindungen freien, gegebenenfalls substituierten Kohlenwasserstoffrest mit 1 bis 18 Kohlenstoffatomen bedeutet,
- R²: einen einwertigen Kohlenwasserstoffrest mit aliphatischer Kohlenstoff-Kohlenstoff-Mehrfachbindung mit 2 bis 18 Kohlenstoffatomen bedeutet,
- a: 0, 1, 2 oder 3 ist und
- b: 0, 1 oder 2 ist,
mit der Maßgabe, daß die Summe a + b kleiner oder gleich 3 ist und durchschnittlich mindestens zwei Reste R² je Molekül vorliegen.

Die Organopolysiloxane (A) besitzen vorzugsweise eine durchschnittliche Viskosität von 10 bis 30 000 mm²/s bei 25°C, besonders bevorzugt zwischen 200 und 7 000 mm²/s.

Beispiele für Kohlenwasserstoffreste R¹ sind Alkylreste, wie der Methyl-, Ethyl-, n-Propyl-, iso-Propyl-, 1-n-Butyl-, 2-n-Butyl, iso-Butyl, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Octadecylreste, wie der n-Octadecylrest, Cycloalkylreste, wie Cyclopentyl-, Cyclohexyl-, Cycloheptylreste und Methylcyclohexylreste, ungesättigte Reste, wie der Allyl-, 5-Hexenyl-, 7-Octenyl-, 9-Decenyl-, 11-Dodecenyl-, Cyclohexenyl- und Styrylrest, Arylreste, wie o-, m-, p-Tolylreste, Xylylreste und Ethylphenylreste und Aralkylreste, wie der Benzylrest, der α- und β-Phenylethylrest.

Beispiele für substituierte Kohlenwasserstoffreste R¹ sind Halogenalkylreste, wie der 3,3,3-Trifluor-n-propylrest, der 2,2,2,2',2',2'-Hexafluorisopropylrest und der Heptafluorisopropylrest, sowie Halogenarylreste, wie der o-, m- und p-Chlorphenylrest.

Bevorzugt handelt es sich bei Rest R¹ um Alkylreste mit 1 bis 8 Kohlenstoffatomen, wobei der Methylrest besonders bevorzugt ist.

Beispiele für Reste R² sind Alkenylreste, wie der Vinyl-, Allyl-, 3-Butenyl-, 4-Pentenylrest, 5-Hexenyl-, 6-Heptenyl-, 7-Octenyl- und 11-Dodecenylrest sowie Alkinylreste, wie der Ethinyl-, Propargyl- und 1-Propinylrest, wobei der Vinyl-, 5-Hexenyl- und Propargylrest bevorzugt und der Vinylrest besonders bevorzugt ist.

Besonders bevorzugt handelt es sich bei Organopolysiloxan (A) um lineare Siloxane der allgemeinen Formel

R²R¹₂Si-O-(R¹₂SiO)ᵣ-(R²R¹SiO)ₛ-SiR¹₂R² (III),

wobei R¹ und R² jeweils die oben dafür angegebene Bedeutung haben, r eine ganze Zahl zwischen 40 und 700, vorzugsweise zwischen 10 und 200, ist und s 0 oder eine ganze Zahl von 1 bis 20, vorzugsweise 0 oder eine ganze Zahl von 1 bis 5, insbesondere 0, bedeutet.

Falls s in Formel (III) verschieden 0 ist, dann können die R²R¹SiO-Einheiten beliebig in der Polymerketten verteilt sein. Die stöchiometrischen Koeffizienten r und s können jeweils Mittelwerte sein.

Ferner kann es sich bei den erfindungsgemäß eingesetzten Siloxanen (A) auch um Alkenylgruppen aufweisende Siloxancopolymere gemäß US-A 5,241,034 (Wacker-Chemie GmbH; ausgegeben am 31.8.1993) bzw. der entsprechenden DE-A 41 23 423 handeln.

Als Organopolysiloxane (B), die Si-gebundene Wasserstoffatome aufweisen, werden vorzugsweise lineare, cyclische oder verzweigte Organopolysiloxane aus Einheiten der Formel 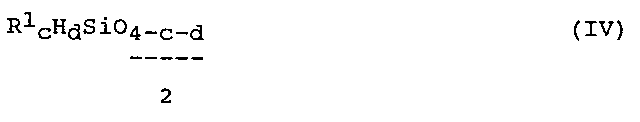 eingesetzt, wobei
- R¹: die oben dafür angegebene Bedeutung hat,
- c: 0, 1, 2 oder 3 ist und
- d: 0, 1 oder 2 ist,
mit der Maßgabe, daß die Summe von c + d kleiner oder gleich 3 ist und durchschnittlich mindestens zwei Si-gebundene Wasserstoffatome je Molekül vorliegen.

Die Organopolysiloxane (B) besitzen vorzugsweise eine durchschnittliche Viskosität von 10 bis 1 000 mm²/s bei 25°C, besonders bevorzugt zwischen 10 und 100 mm²/s, insbesondere zwischen 20 und 60 mm²/s.

Die Organopolysiloxane (B) haben vorzugsweise einen Wasserstoffgehalt von mindestens einem Gewichtsprozent.

Besonders bevorzugt handelt es sich bei dem erfindungsgemäß eingesetzten Organopolysiloxan (B) um solche der allgemeinen Formel

R¹₃Si-O-(R¹₂SiO)ᵤ-(HR¹SiO)ₜ-SiR¹₃ (V),

worin R¹ die obengenannte Bedeutung hat, t eine ganze Zahl zwischen 10 und 200, vorzugsweise zwischen 20 und 100, ist und u eine ganze Zahl zwischen 5 und 100, vorzugsweise zwischen 10 und 50, bedeutet. Die HR¹SiO-Einheiten in Formel (V) können dabei beliebig über die Polymerketten verteilt sein. Die stöchiometrischen Koeffizienten t und u können jeweils Mittelwerte sein.

Insbesondere handelt es sich bei den Siloxanen (B) um wasserstoffreiche Polyorganowasserstoffsiloxane (B') der Formel (V) mit einem Verhältnis von t:u größer 2:1, besonders bevorzugt mit einem Verhältnis von t:u größer oder gleich 3:1 und einem Wasserstoffgehalt von 1,1 bis 1,7 Gewichtsprozent.

Das Mengenverhältnis von Polyorganowasserstoffsiloxan (B) zu aliphatisch ungesättigtem Polyorganosiloxan (A) richtet sich nach der Anzahl der aliphatisch ungesättigten Reste im Siloxan (A). Um eine vollständige Vernetzung der erfindungsgemäßen Emulsion zu gewährleisten, wird im allgemeinen ein Überschuß von Silicium-gebundenem Wasserstoff relativ zu SiC-gebundenen aliphatisch ungesättigten Resten eingesetzt. In den erfindungsgemäßen Emulsionen beträgt das zahlenmäßige Verhältnis von Si-gebundenem Wasserstoff von Siloxan (B) zu SiC-gebundenen aliphatisch ungesättigten Resten von Siloxan (A) vorzugsweise 1,5 : 1 bis 3 : 1.

In der erfindungsgemäßen Vernetzerkomponente liegt das Si-gebundenen Wasserstoff aufweisende Organopolysiloxan (B) vorzugsweise in einer Menge von 1,5 bis 10 Gewichtsteilen, besonders bevorzugt 2 bis 5 Gewichtsteilen, jeweils bezogen auf 100 Gewichtsteile Polyorganosiloxan (A) vor.

Als Organopolysiloxane (C), die aliphatische Kohlenstoff-Kohlenstoff-Mehrfachbindungen und Si-gebundene Wasserstoffatome aufweisen und anstelle von Organopolysiloxanen (A) und (B) verwendet werden können, werden vorzugsweise solche aus Einheiten der Formel 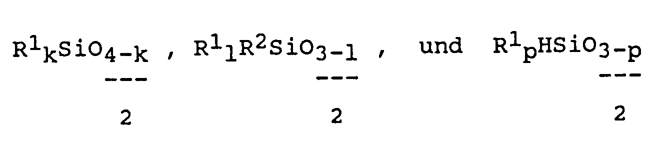 eingesetzt, wobei R¹ und R² die oben dafür angegebene Bedeutung haben,
- k: 0, 1, 2 oder 3,
- l: 0, 1 oder 2 und
- p: 0, 1 oder 2 ist,
mit der Maßgabe, daß je Molekül durchschnittlich mindestens 2 Reste R² und durchschnittlich mindestens 2 Si-gebundene Wasserstoffatome vorliegen.

Beispiele für Organopolysiloxane (C) sind solche aus SiO_{4/2}-, R¹₃SiO_{1/2}-, R¹₂R²SiO_{1/2}- und R¹₂HSiO_{1/2}-Einheiten, sogenannte MQ-Harze, wobei diese Harze zusätzlich R¹SiO_{3/2}- und R¹₂SiO-Einheiten enthalten können und R¹ wie R² die obengenannte Bedeutung haben.

Die Organopolysiloxane (C) besitzen vorzugsweise eine durchschnittliche Viskosität von 10 bis 100 000 mm²/s bei 25°C bzw. sind Feststoffe mit Molekulargewichten von 5 000 bis 50 000 g/mol.

Bei den in den erfindungsgemäßen Emulsionen anstelle von Siloxan (A) und Siloxan (B) eingesetzten Siloxanen (C) beträgt das zahlenmäßige Verhältnis von Si-gebundenem Wasserstoff zu SiC-gebundenen aliphatisch ungesättigten Resten vorzugsweise 1,5 : 1 bis 3 : 1.

Bei den in den erfindungsgemäßen Emulsionen eingesetzten Katalysatoren (D) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern wie Siliciumdioxid, Aluminiumoxid oder Aktivkohle befinden kann, Verbindungen oder Komplexe von Platin, wie Platinhalogenide, z.B. PtCl₄, H₂PtCl₆·6H₂O, Na₂PtCl₄·4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆·6H₂O und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenen Halogen, Bis-(γ-picolin)-platindichlorid, Trimethylendipyridinplatindichlorid, Dicyclopentadienplatindichlorid, Dimethylsulfoxidethylenplatin-(II)-dichlorid, Cyclooctadien-Platindichlorid, Norbornadien-Platindichlorid, γ-Picolin-Platindichlorid, Cyclopentadien-Platindichlorid sowie Umsetzungsprodukte von Platintetrachlorid mit Olefin und primärem Amin oder sekundärem Amin oder primärem und sekundärem Amin gemäß US-A 4,292,434, wie das Umsetzungsprodukt aus in 1-Octen gelöstem Platintetrachlorid mit sec.-Butylamin oder Ammonium-Platinkomplexe gemäß EP-B 110 370. Ferner kann es sich bei dem Katalysator (D) um einen Platin-Komplex gemäß der oben bereits zitierten deutschen Anmeldung mit dem Aktenzeichen P 44 23 195.4 handeln.

Bevorzugte Katalysatoren (D) sind Platin-1,3-Divinyl-1,1,3,3-tetramethyldisiloxankomplexe und Platin-Komplexe gemäß der oben zitierten deutschen Anmeldung mit dem Aktenzeichen P 44 23 195.4.

Der Platinkatalysator (D) wird vorzugsweise in Konzentrationen von 10 bis 500 Gewichts-ppm, berechnet als elementares Platin und bezogen auf die Gesamtmenge an Organopolysiloxan (A) in der erfindungsgemäßen, vernetzbaren Emulsion, angewandt.

In der erfindungsgemäßen Katalysatorkomponente kann die Konzentration des Katalysators (D) innerhalb weiter Grenzen liegen, beispielsweise zwischen 5 und 10 000 Gewichts-ppm, berechnet als elementares Platin und bezogen auf die Menge an Organopolysiloxan (A) in der Katalysatorkomponente, wobei vorzugsweise die Katalysatorkonzentration 50 bis 2 000 Gewichts-ppm, berechnet als elementares Platin und bezogen auf die Menge an Organopolysiloxan (A) in der Katalysatorkomponente, beträgt.

Zur besseren Verarbeitung, insbesondere zur Topfzeitverlängerung, werden oftmals zusätzlich zu den genannten Katalysatoren Inhibitoren eingesetzt. Als Inhibitoren (F) können alle bisher bekannten Verbindungen, welche die Anlagerung von Si-gebundenem Wasserstoff an aliphatische Mehrfachbindung verzögern, eingesetzt werden.

Beispiele für Inhibitoren sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 hPa und mindestens einer aliphatischen Dreifachbindung, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, eine Mischung aus Diallylmaleinat und Vinylacetat, und Maleinsäuremonoester.

Falls Inhibitor (F) eingesetzt wird, handelt es sich besonders bevorzugt um Alkinole, wie beispielsweise 2-Methyl-3-butin-2-ol oder 1-Ethinylcyclohexanol.

Die erfindungsgemäßen Emulsionen enthalten vorzugsweise 0,1 bis 0,5 Gewichtsprozent Inhibitor (F), bezogen auf die Gesamtmenge an Polyorganosiloxan (A).

Falls Inhibitor (F) eingesetzt wird, befindet er sich bevorzugt in der erfindungsgemäßen Vernetzerkomponente, wobei es sich dabei um Mengen von vorzugsweise 0,05 bis 10 Gewichtsprozent, besonders bevorzugt 0,1 bis 1 Gewichtsprozent, jeweils bezogen auf die Ölphase der erfindungsgemäßen Vernetzerkomponente, handelt.

Die erfindungsgemäßen Emulsionen können darüberhinaus Organopolysiloxanharz, wie beispielsweise solches gemäß DE-A 42 16 139 (Wacker-Chemie GmbH; ausgegeben am 18.11.1993) bzw. der entsprechenden US-A-5 548 053 enthalten.

Dabei handelt es sich bei den Organopolysiloxanharzen bevorzugt um sogenannte MQ-Harze mit einem durchschnittlichen Molekulargewicht von 500 bis 10 000 g/mol der allgemeinen Formel

[R³₃SiO_{1/2}]ₓ[R³₂R⁴SiO_{1/2}]_{y}[SiO_{4/2}]_{z} (VI),

wobei
- R³: gleich oder verschieden sein kann und eine für R¹ angegebene Bedeutung hat,
- R⁴: gleich oder verschieden sein kann und eine für R² angegebene Bedeutung hat,
- z: verschieden 0 ist,
- x: 0 oder eine Zahl ist,
- y: 0 oder eine Zahl ist,
mit der Maßgabe, daß das Verhältnis von (x+y):z 0,6 : 1 bis 1 : 1 ist.

Falls y in Formel (VI) einen Wert verschieden 0 hat, was bevorzugt ist, beträgt das Verhältnis von x:y bevorzugt 98:2 bis 60:40.

Organopolysiloxanharze, wie solche gemäß Formel (VI), sind bekannt und können beispielsweise nach der in der obengenannten DE-A 42 16 139 beschriebenen Verfahrensweise hergestellt werden.

Falls es sich bei den gegebenenfalls eingesetzten Organopolysiloxanharzen der Formel (VI) ganz oder zum Teil um solche mit y verschieden 0 handelt, so können diese das erfindungsgemäß eingesetzte, aliphatisch ungesättigte Polyorganosiloxan (A) ersetzen, sofern es sich bei der Komponente (A) nicht schon um ein Harz der Formel (VI) handelt.

Falls zur Herstellung der erfindungsgemäßen Emulsionen Organopolysiloxanharze eingesetzt werden, so sind diese bevorzugt in der Vernetzerkomponente enthalten. Vernetzerkomponenten, die Organopolysiloxanharz der Formel (VI) enthalten, sollen im folgenden Trenn-Vernetzerkomponenten genannt werden.

Der Gehalt an Siloxanharz in der Ölphase einer Trenn-Vernetzerkomponente beträgt bevorzugt 50 bis 90 Gewichtsprozent, besonders bevorzugt 65 bis 85 Gewichtsprozent, jeweils bezogen auf das Gesamtgewicht der Ölphase.

Ferner können in der Ölphase der erfindungsgemäßen Trenn-Vernetzerkomponente bis zu 30 Gewichtsprozent eines organischen Lösungsmittels enthalten sein. Beispiele für solche organischen Lösungsmittel sind aromatische Kohlenwasserstoffe, wie Toluol oder Xylol, aliphatische Kohlenwasserstoffe, wie Hexan, n-Heptan, n-Octan, iso-Octan, Octen, Octadien, Undecen, Dodecen, Dodecadien, Tridecen oder Octadecen, sowie aliphatische oder araliphatische Ether, wie Dibutylether oder Anisol, sowie Gemisch der genannten Lösungsmittel, wobei ungesättigte Kohlenwasserstoffe, wie Undecen, Dodecen und Tridecen, bevorzugt sind.

Des weiteren können die erfindungsgemäßen Emulsionen übliche Zusatzstoffe, wie beispielsweise Konservierungsstoffe, wie etwa Formalin und quaternäre Ammoniumsalze, sowie Verdickungsmittel, wie etwa Carboxymethylcellulose und Hydroxyethylcellulose, enthalten. Vorzugsweise enthalten die erfindungsgemäßen Emulsionen darüberhinausgehend keine weiteren Stoffe.

Die Herstellung der einzelnen erfindungsgemäßen Emulsionskomponenten erfolgt vorzugsweise durch Emulgierung der jeweiligen Ölphasen in Wasser in Gegenwart der erfindungsgemäßen Zusammensetzung, bestehend aus einem Polyvinylalkohol mit niedrigem Hydrolysegrad und einem Alkylphenylpolyglykolether.

Die erfindungsgemäßen Katalysatorkomponenten wie auch Vernetzerkomponenten enthalten jeweils unabhängig voneinander die erfindungsgemäßen Zusammensetzungen vorzugsweise in einer solchen Menge, daß bezogen auf 100 Gewichtsteile Organopolysiloxane (Ölphase) 2 bis 25 Gewichtsteile, besonders bevorzugt 3 bis 10 Gewichtsteile, Polyvinylalkohol mit niederem Verseifungsgrad und 0,1 bis 2 Gewichtsteile, besonders bevorzugt 0,5 bis 1,5 Gewichtsteile, Alkylphenylpolyglykolether anwesend sind.

Die erfindungsgemäßen Trenn-Vernetzerkomponenten enthalten dabei die erfindungsgemäßen Zusammensetzungen vorzugsweise in einer solchen Menge, daß bezogen auf 100 Gewichtsteile Organopolysiloxane (Ölphase) 4 bis 25 Gewichtsteile, besonders bevorzugt 6 bis 8 Gewichtsteile, Polyvinylalkohol mit niederem Verseifungsgrad und 0,5 bis 3 Gewichtsteile, besonders bevorzugt 1 bis 2 Gewichtsteile, Alkylphenylpolyglykolether anwesend sind.

Zur Herstellung der erfindungsgemäßen vernetzbaren Emulsionen wird dann bevorzugt die Vernetzerkomponente mit der Katalysatorkomponente vermischt.

Falls zur Herstellung der erfindungsgemäßen Emulsionen Zusatzstoffe eingesetzt werden, so können diese je nach Art des Zusatzstoffes auf beliebige und bekannte Art und Weise, gegebenenfalls auch als Lösung oder in Form einer Emulsion, zugegeben werden.

Das Emulgieren kann in üblichen, zur Herstellung von Emulsionen geeigneten Mischgeräten, wie beispielsweise schnellaufende Stator-Rotor-Rührgeräte nach Prof. P. Willems, bekannt unter dem Handelsnamen "Ultra-Turrax", erfolgen. Hierzu sei noch z.B. auf Ullmanns Encyklopädie der Technischen Chemie, Urban & Schwarzenberg, München, Berlin, 3. Auflage, Band 1, Seite 720 ff verwiesen.

Das Volumenverhältnis von Vernetzerkomponente zu Katalysatorkomponente (sogenanntes Packungsdesign) kann bei jeweils gleichem Silicongehalt über einen weiten Bereich variiert werden. Vorzugsweise beträgt das Volumenverhältnis von Vernetzerkomponente zu Katalysatorkomponente 10:1 bis 1:10, besonders bevorzugt 10:1 bis 1:1. Sofern für die Herstellung der erfindungsgemäßen vernetzbaren Emulsionen eine Trenn-Vernetzerkomponente eingesetzt wird, beträgt das Volumenverhältnis von Trenn-Vernetzerkomponente gegebenenfalls im Gemisch mit Vernetzerkomponente ohne Harzanteil einerseits und Katalysatorkomponente andererseits insbesondere 10:1 bis 5:1, kann aber auch 1:1 betragen.

Selbstverständlich können dabei Abmischungen von Vernetzerkomponente, die kein Harz der Formel (VI) enthalten, und Trenn-Vernetzerkomponente in jedem beliebigen Mischungsverhältnis je nach Anwendung zueinander eingesetzt werden. Dadurch kann beispielsweise eine stufenlose Einstellung des Trennkraftniveaus der ausgehärteten Siloxanbeschichtung gegenüber Adhäsiven, innerhalb der durch den Einsatz der reinen Vernetzerkomponente ohne Harz bzw. der reinen Trenn-Vernetzerkomponente gegebenen Grenzen, gewährleistet werden.

Die erfindungsgemäßen vernetzbaren Emulsionen können für alle Zwecke eingesetzt werden, für die auch bisher wäßrige Emulsionen auf der Basis von Organopolysiloxanen eingesetzt wurden. Insbesondere eignen sich die erfindungsgemäßen additionsvernetzbaren Emulsionen zur Herstellung von Trennbeschichtungen gegenüber klebenden Artikeln. So eignen sie sich beispielsweise zum Herstellen von Trenn-, Abdeck- und Mitläuferpapieren einschließlich Mitläuferpapieren, die bei der Herstellung von z.B. Gieß- oder Dekorfolien oder von Schaumstoffen, einschließlich solcher aus Polyurethan, eingesetzt werden. Die erfindungsgemäßen vernetzbaren Emulsionen eignen sich weiterhin beispielsweise zur Herstellung von Trenn-, Abdeck- und Mitläuferpappen, -folien und -tüchern, für die Ausrüstung der Rückseiten von selbstklebenden Bändern oder selbstklebenden Folien oder der beschrifteten Seiten von selbstklebenden Etiketten. Die erfindungsgemäßen vernetzbaren Emulsionen eignen sich auch für die Ausrüstung von Verpackungsmaterial, wie solchem aus Papier, Pappschachteln, Metallfolien und Fässern, z.B. Pappe, Kunststoff, Holz oder Eisen, das bzw. die für Lagerung und/oder Transport von klebrigen Gütern, wie Klebstoffen, klebrigen Lebensmitteln, z.B. Kuchen, Honig, Bonbons und Fleisch, Bitumen, Asphalt, gefetteten Materialien und Rohgummi, bestimmt ist bzw. sind. Ein weiteres Beispiel für die Anwendung der erfindungsgemäßen vernetzbaren Emulsionen ist die Ausrüstung von Trägern zum Übertragen von Haftklebeschichten beim sogenannten "Transfer-Verfahren".

Die erfindungsgemäßen additionsvernetzbaren Emulsionen eignen sich zur Herstellung der mit dem Trennpapier verbundenen Selbstklebematerialien sowohl nach dem off-line Verfahren als auch nach dem in-line Verfahren.

Das Auftragen der erfindungsgemäßen additionsvernetzbaren Emulsionen auf die klebrige Stoffe abweisend zu machenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z.B. mittels einer Offsetgravur-Überzugsvorrichtung, Messer- oder Rakel-Beschichtung oder mittels einer Luftbürste.

Bei den klebrige Stoffe abweisend zu machenden Oberflächen, die im Rahmen der Erfindung behandelt werden können, kann es sich um Oberflächen beliebiger bei Raumtemperatur und 900 bis 1100 hPa fester Stoffe handeln. Beispiele für derartige Oberflächen sind diejenigen von Papier, Holz, Kork und Kunststoffolien, z.B. Polyethylenfolien oder Polypropylenfolien, gewebtem und ungewebtem Tuch aus natürlichen oder synthetischen Fasern oder Glasfasern, keramischen Gegenständen, Glas, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 g/m², ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen additionsvernetzbaren Emulsionen von Organopolysiloxanen härten innerhalb kurzer Zeit nach Verdampfen des Lösungsmittelanteils, d.h. des Wassers und ggf. organischen Lösungsmittels, zu Elastomeren aus.

Die Vernetzung der erfindungsgemäßen additionsvernetzbaren Emulsionen erfolgt vorzugsweise bei 50°C bis 220°C, besonders bevorzugt 60 bis 180°C, und einem Druck von 900 bis 1100 hPa.

Als Energiequellen für die Vernetzung durch Erwärmen werden vorzugsweise Öfen, z.B. Umlufttrockenschränke, Heizkanäle, beheizte Walzen, beheizte Platten oder Wärmestrahlen des Infrarotbereiches verwendet.

Die erfindungsgemäßen additionsvernetzbaren Emulsionen, insbesondere solche mit wasserstoffreichen Polyorganosiloxanen (B'), haben den Vorteil, daß mit ihnen eine hervorragende Abdeckung auf Substraten erzielt wird.

Des weiteren haben die erfindungsgemäßen additionsvernetzbaren Emulsionen, insbesondere solche mit wasserstoffreichen Polyorganosiloxanen (B'), den Vorteil, daß sie ausgezeichnete Verlaufseigenschaften und ein sehr gutes Benetzungsverhalten aufweisen, auf Trennpapieren sehr niedrige Trennkraftwerte erzielt werden können und hohe Abriebfstigkeiten erreicht werden.

Von Vorteil ist auch, daß die Aushärtung der erfindungsgemäßen Emulsionen bei gegebener Temperatur bereits in sehr kurzer Zeit erfolgt.

Ferner haben die erfindungsgemäßen additionsvernetzbaren Emulsionen den Vorteil, daß sie bei einer Lagerung bei 25°C und dem Druck der umgebenden Atmosphäre mindestens ein Jahr stabil gegenüber Koaleszenz sind.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1 000 hPa und bei Raumtemperatur, also bei etwa 23°C, bzw. bei einer Temperatur, die sich bei der Emulsionsherstellung ohne zusätzliche Heizung und Kühlung einstellt, durchgeführt.

Zur Emulsionsherstellung wird ein Stator-Rotor-Rührgerät erhältlich unter dem Handelsnamen "Ultra-Turrax" T50 bei Janke & Kunkel, D-79219 Staufen, mit Dispergierwerkzeug S50-G45M verwendet.

Die Stabilität der Emulsionen wird durch den Test mit einer Zentrifuge erhältlich unter dem Handelsnamen "Varifuge GL" bei Heraeus Christ bei 4 000 Upm (Umdrehungen/Minute) während 1 Stunde ermittelt. Danach wird die Abscheidung von Wasser und gegebenenfalls von Öl in ml gemessen. Die Messung der Partikelgröße erfolgt durch Laserstreulichtanalyse an einem Gerät erhältlich unter der Handelsbezeichnung "Autosizer 2c" der Firma Mütek, Herrsching.

"Polyvinylalkohol I" ist ein Polyvinylalkohol mit einem Verseifungsgrad von 75,0 bis 79,0 Mol-% und einem durchschnittlichen Molekulargewicht von 16 000 g/mol (käuflich erhältlich unter der eingetragenen Marke "Polyviol" V03/240 bei der Wacker-Chemie GmbH, München).

"Polyvinylalkohol II" ist ein Polyvinylalkohol mit einem Verseifungsgrad von 86,0 bis 89,0 Mol-% und einem durchschnittlichen Molekulargewicht von 20 000 g/mol (käuflich erhältlich unter der eingetragenen Marke "Polyviol" G04/140 bei der Wacker-Chemie GmbH, München).

Nonylphenylpolyglykolether mit im Mittel 15 Glykoleinheiten ist käuflich erhältlich unter der Bezeichnung "Arkopal" N-150 bei der Hoechst AG, Frankfurt am Main.

### Beispiel 1

### a) Herstellung der Vernetzerkomponente 1:

Zu der Mischung von 120 Teilen einer 20 %igen wäßrigen Lösung von Polyvinylalkohol I und 5 Teilen Nonylphenylpolyglykolether werden in 6 Portionen 500 Teile Vernetzer-Ölphase 1, bestehend aus 478,2 Teilen eines linearen Polydimethylsiloxans mit endständigen Dimethylvinylsilylgruppen mit einer Viskosität von 1 000 mm²/s, 2,7 Teilen Ethinylcyclohexanol und 19,1 Teilen eines Polymethylwasserstoffsiloxans mit einem Gehalt an Si-gebundenem Wasserstoff von 1,15 % und einer Viskosität von 40 mm²/s, mit dem Ultra-Turrax bei einer Drehzahl von 6 000 Minute⁻¹ eingearbeitet. Dabei entsteht eine steife Phase, welche anschließend mit 433 Teilen deionisiertem Wasser verdünnt wird. Zuletzt wird als Biozid 1 Teil 36,5 %ige wäßrige Formaldehydlösung eingerührt. Die erhaltene Emulsion ist laut Zentrifugentest stabil und hat eine mittlere Partikelgröße von 328 nm.

### b) Herstellung der Katalysatorkomponente 1:

Nach der oben unter a) beschriebenen Vorgehensweise werden in die Mischung einer 20 %igen wäßrigen Lösung von 120 Teilen Polyvinylalkohol I und 5 Teilen Nonylphenylpolyglykolether 500 Teile einer Katalysator-Ölphase 1 eingearbeitet, welche aus einem linearen Polydimethylsiloxan mit endständigen Dimethylvinylsilylgruppen mit einer Viskosität von 1 000 mm²/s und 200 ppm eines Platin-1,3-Divinyl-1,1,3,3-tetramethyldisiloxankomplexes, berechnet als elementares Platin, besteht. Nach Verdünnung der erhaltenen steifen Phase mit 433 Teilen deionisiertem Wasser und Zugabe von 1 Teil 36,5 %iger wäßriger Formaldehyd-Lösung wird eine stabile Emulsion mit einer mittleren Partikelgröße von 325 nm erhalten.

Zur Herstellung der vernetzbaren Emulsion werden 10 Teile Vernetzerkomponente 1, 10 Teile Katalysatorkomponente 1 und 80 Teile Wasser miteinander vermischt. Die so erhaltene Emulsion wird nun mit Hilfe einer 30 µm Drahtrakel auf Pergaminpapier mit einem Gewicht von 65 g/m² (käuflich erhältlich unter der Bezeichnung "Buxil N 925" der Firma Cartiera Bosso, Italien) aufgetragen. Das so behandelte Papier wird nun für eine Dauer von 30 Sekunden bei 150°C in einen Umlufttrockenschrank gehängt, wobei die Emulsion auf dem Papier zu einer Schicht ausvulkanisiert.
Das Siliconauftragsgewicht, d.h. die durch Röntgenfluoreszenzanalyse bestimmte Siliconmenge pro Flächeneinheit, beträgt 1,5 g/m².

Das so beschichtete Papier wird hinsichtlich der Trennkraft entsprechend FINAT Testmethode 10 und der Restklebkraft entsprechend FINAT Testmethode 11 untersucht. Die Trennkräfte werden gegenüber Acrylkleber erhältlich unter der Bezeichnung "A 7475", Kautschukkleber erhältlich unter der Bezeichnung "K 7476" und "Tesa 4154" jeweils bei der Firma Beiersdorf, Hamburg, gemessen. Die Messung der Restklebkraft erfolgt mit Kleber "Tesa 4154".

Die Ergebnisse finden sich in Tabelle 1.

Des weiteren werden mit den mit der vernetzbaren Emulsion beschichteten Papieren i)-v) wie in Beispiel 5 beschrieben die Verlaufseigenschaften (Benetzungseigenschaften) auf den Substraten und der Verankerung auf dem Substrat (=rub off) untersucht sowie der sogenannte Shirlastain-Test durchgeführt.

Die Ergebnisse hierzu finden sich in den Tabellen 2 bis 4.

### Beispiel 2

### a) Herstellung der Vernetzerkomponente 2:

Die in Beispiel 1 unter a) beschriebene Vorgehensweise wird wiederholt, mit der Abänderung, daß anstelle von 500 Teilen Vernetzer-Ölphase 1 500 Teile Vernetzer-Ölphase 2, bestehend aus 487,5 Teilen eines linearen Polydimethylsiloxans mit endständigen Dimethylvinylsilylgruppen mit einer Viskosität von 1 000 mm²/s, 1,4 Teilen Ethinylcyclohexanol und 11,1 Teilen eines Polymethylwasserstoffsiloxans mit einem Gehalt an Si-gebundenem Wasserstoff von 1,15 % und einer Viskosität von 40 mm²/s, eingesetzt wird. Die laut Zentrifugentest stabile Emulsion hat eine mittlere Partikelgröße von 294 nm.

### b) Herstellung der Katalysatorkomponente 2

Die in Beispiel 1 unter b) beschriebene Vorgehensweise wird wiederholt, mit der Abänderung, daß anstelle von Katalysator-Ölphase 1 Katalysator-Ölphase 2, bestehend aus 500 Teilen eines Polydiorganosiloxans mit endständigen Dimethylvinylsilylgruppen mit einer Viskosität von etwa 500 mm²/s und einem Gehalt von 1 000 ppm eines Platin-1,3-Divinyl-1,1,3,3-tetramethyldisiloxankomplexes, berechnet als elementares Platin, eingesetzt wird. Die Katalysator-Ölphase 2 ist unter der Bezeichnung "Katalysator C05" bei der Wacker-Chemie GmbH, München, käuflich erhältlich. Die laut Zentrifugentest stabile Emulsion hat eine mittlere Partikelgröße von 297 nm.

Zur Herstellung der vernetzbaren Emulsion werden 18 Teile Vernetzerkomponente 2, 2 Teile Katalysatorkomponente 2 und 80 Teile Wasser miteinander vermischt. Des weiteren wird wie in Beispiel 1 beschrieben verfahren. Die Ergebnisse finden sich in Tabelle 1.

### Beispiel 3

### a) Herstellung der Trenn-Vernetzerkomponente 1

Die in Beispiel 1 unter a) beschriebene Vorgehensweise wird wiederholt, mit der Abänderung, daß unter Verwendung einer Mischung aus 170 Teilen einer 20 %igen wäßrigen Lösung von Polyvinylalkohol I und 7 Teilen Nonylphenylpolyglykolether und anstelle von 500 Teilen Vernetzer-Ölphase 1 500 Teile Trenn-Vernetzer-Ölphase 1, bestehend aus 458,7 Teilen eines Siliconharzes der Formel [(CH₃)₃SiO_{1/2}]ₓ [(CH₃)₂(CH₂=CH)SiO_{1/2}]_{y} [SiO_{4/2}]_{z} mit einem Verhältnis von x:y gleich 10:1 bis 9:1 und (x+y):z gleich 0,7 bis 0,75 (käuflich erhältlich unter der eingetragenen Marke "CRA" 17 bei der Wacker-Chemie GmbH) und 41,3 Teilen eines Polymethylwasserstoffsiloxans mit einem Gehalt an Si-gebundenem Wasserstoff von 1,15 % und einer Viskosität von 40 mm²/s, eingesetzt wird und daß die erhaltene steife Phase mit 405 Teilen deionisiertem Wasser verdünnt und dann mit 1 Teil 36,5 %iger wäßriger Formaldehyd-Lösung versetzt wird. Die laut Zentrifugentest stabile Emulsion hat eine mittlere Partikelgröße von 265 nm.

Zur Herstellung der vernetzbaren Emulsion werden 9 Teile der Trenn-Vernetzerkomponente 1, 9 Teile der in Beispiel 2 unter a) beschriebenen Vernetzerkomponente 2, 2 Teile der in Beispiel 2 unter b) beschriebenen Katalysatorkomponente 2 und 80 Teile Wasser miteinander vermischt. Des weiteren wird wie in Beispiel 1 beschrieben verfahren. Die Ergebnisse finden sich in Tabelle 1.

### Beispiel 4

Zur Herstellung der vernetzbaren Emulsion werden 18 Teile der in Beispiel 3 unter a) beschriebenen Trenn-Vernetzerkomponente 1, 2 Teile der in Beispiel 2 unter b) beschriebenen Katalysatorkomponente 2 und 80 Teile Wasser miteinander vermischt. Des weiteren wird wie in Beispiel 1 beschrieben verfahren. Die Ergebnisse finden sich in Tabelle 1.

**Tabelle 1**

| Beispiel | Trennkraft [cN/cm] | | | Restklebkraft [%] |
|---|---|---|---|---|
| | "A 7475" | "K 7476" | "Tesa 4154" | |
| 1 | 4,9 | 15,3 | 2,1 | 126 |
| 2 | 6,9 | 11,6 | 1,5 | 105 |
| 3 | 36,3 | 67,8 | 14,7 | 123 |
| 4 | 216,5 | 232,4 | 103,9 | 103 |

### Beispiel 5

### a) Herstellung der Vernetzerkomponente 3:

Zu der Mischung einer 20 %igen wäßrigen Lösung von 120 Teilen Polyvinylalkohol I und 5 Teilen Nonylphenylpolyglykolether werden in 6 Portionen 500 Teile Vernetzer-Ölphase 3, bestehend aus 469,2 Teilen eines linearen Polydimethylsiloxans mit endständigen Dimethylvinylsilylgruppen mit einer Viskosität von 1 000 mm²/s, 2,6 Teilen Ethinylcyclohexanol und 28,2 Teilen eines Polymethylwasserstoffsiloxans mit einem Gehalt an Si-gebundenem Wasserstoff von 0,73 % und einer Viskosität von 65 mm²/s, mit dem Ultra-Turrax bei einer Drehzahl von 6 000 Minute⁻¹ eingearbeitet. Dabei entsteht eine steife Phase, welche anschließend mit 433 Teilen deionisiertem Wasser verdünnt wird. Zuletzt wird als Biozid 1 Teil 36,5 %ige wäßrige Formaldehydlösung eingerührt. Die erhaltene Emulsion ist laut Zentrifugentest stabil und hat eine mittlere Partikelgröße von 383 nm.

Zur Herstellung der vernetzbaren Emulsion werden 10 Teile Vernetzerkomponente 3, 10 Teile der in Beispiel 1 unter b) beschriebenen Katalysatorkomponente 1 und 80 Teile Wasser miteinander vermischt.

Die so erhaltene Emulsion wird nun mit Hilfe einer 30 µm Drahtrakel jeweils auf
i) Pergaminpapier mit einem Gewicht von 65 g/m² (käuflich erhältlich unter der Bezeichnung "Buxil N 925" bei der Firma Cartiera Bosso, Italien),
ii) ein clay-gestrichenes Kraft-Papier mit einem Gewicht von 135 g/m² (käuflich erhältlich unter der Bezeichnung "Hifi Silico 609" bei den Papierfabriken Cham-Tenero, Cham, Schweiz),
iii)ein clay-gestrichenes Kraft-Papier mit einem Gewicht von 140 g/m² (käuflich erhältlich unter der Bezeichnung "Hifi Silico 691" bei den Papierfabriken Cham-Tenero, Cham, Schweiz),
iv) ein clay-gestrichenes Kraft-Papier mit einem Gewicht von 87 g/m² (käuflich erhältlich unter der Bezeichnung "Algro Sol 87" bei den Hannoverschen Papierfabriken, Alfeld-Gronau, Deutschland) und
v) ein clay-gestrichenes Kraft-Papier mit einem Gewicht von 98 g/m² (käuflich erhältlich unter der Bezeichnung "CMC-3" bei Stora Billerud, Säffle, Schweden)
aufgetragen. Das Siliconauftragsgewicht, d.h. die durch Röntgenfluoreszenzanalyse bestimmte Siliconmenge pro Flächeneinheit, beträgt in jedem Fall 1,5 g/m².

Die so behandelten Papiere werden nun jeweils für eine Dauer von 30 Sekunden bei 150°C in einen Umlufttrockenschrank gehängt, wobei die Emulsion auf den Papieren ausvulkanisiert.

Die so beschichteten Papiere werden jeweils hinsichtlich der Verlaufseigenschaften (Benetzungseigenschaften) auf den Substraten und der Verankerung auf dem Substrat (=rub off) untersucht sowie der sogenannte Shirlastain-Test durchgeführt.

Bei der Bewertung der Verlaufseigenschaften wird die Benetzung des Papiers durch die Emulsion zunächst visuell beobachtet. Verlaufsstörungen zeigen sich zunächst durch punktförmige Krater, die sich mehr oder weniger schnell ausbreiten. Nach der Vulkanisation erscheinen schlecht benetzte Stellen matt, und die durch unterschiedliche Silicon-Schichtdicken bedingte unterschiedliche Abdeckung des Papiers zeigt sich auch im Färbetest durch meist unregelmäßige Anfärbungsmuster.

Bei der Bestimmung der Verankerung auf dem Substrat wird mit der Fingerkuppe unter hohem Druck über eine Stelle der Siliconbeschichtung schnell hin und her gerieben, wobei sich mangelhafte Verankerung durch abgeriebene Siliconpartikel offenbart. Die Bewertung erfolgt nach einer 6-teiligen Skala mit 1 = kein rub off und 6 = sehr starker rub off.

Bei dem Shirlastain-Test läßt man die Farbstofflösung "Shirlastain A" käuflich erhältlich bei Shirley Developments Ltd., UK für eine Dauer von 2 Minuten auf die Oberfläche des mit Silicon beschichteten Papiers einwirken, wobei mangelnde Abdeckung durch den Grad der Anfärbung des Papiers deutlich wird.

Die Ergebnisse finden sich in Tabellen 2-4.

### Vergleichsbeispiel 1

### a) Herstellung der Vernetzerkomponente V1

Die in Beispiel 5 unter a) beschriebene Vorgehensweise wird wiederholt, mit der Abänderung, daß als Emulgator anstelle der Mischung einer 20 %igen wäßrigen Lösung von 120 Teilen Polyvinylalkohol I und 5 Teilen Nonylphenylpolyglykolether ausschließlich 120 Teile einer 20 %igen wäßrigen Lösung von Polyvinylalkohol I eingesetzt werden. Die erhaltene Emulsion ist laut Zentrifugentest stabil und hat eine mittlere Partikelgröße von 313 nm.

### b) Herstellung der Katalysatorkomponente V1

Die in Beispiel 1 unter b) beschriebene Vorgehensweise wird wiederholt, mit der Abänderung, daß als Emulgator anstelle der Mischung einer 20 %igen wäßrigen Lösung von 120 Teilen Polyvinylalkohol I und 5 Teilen Nonylphenylpolyglykolether ausschließlich 120 Teile einer 20 %igen wäßrigen Lösung von Polyvinylalkohol I eingesetzt werden. Die erhaltene Emulsion ist laut Zentrifugentest stabil und hat eine mittlere Partikelgröße von 306 nm.

Zur Herstellung der vernetzbaren Emulsion werden 10 Teile Vernetzerkomponente V1, 10 Teile Katalysatorkomponente V1 und 80 Teile Wasser miteinander vermischt. Mit der so erhaltenen Emulsion wird nun wie in Beispiel 5 beschrieben verfahren. Die Ergebnisse finden sich in den Tabellen 2-4.

### Vergleichsbeispiel 2

### a) Herstellung der Vernetzerkomponente V2

Die in Beispiel 1 unter a) beschriebene Vorgehensweise wird wiederholt, mit der Abänderung, daß als Emulgator anstelle der Mischung einer 20 %igen wäßrigen Lösung von 120 Teilen Polyvinylalkohol I und 5 Teilen Nonylphenylpolyglykolether ausschließlich 120 Teile einer 20 %igen wäßrigen Lösung von Polyvinylalkohol I eingesetzt werden. Die erhaltene Emulsion ist laut Zentrifugentest stabil und hat eine mittlere Partikelgröße von 314 nm.

Zur Herstellung der vernetzbaren Emulsion werden 10 Teile Vernetzerkomponente V2, 10 Teile der in Vergleichsbeispiel 1 beschriebenen Katalysatorkomponente V1 und 80 Teile Wasser miteinander vermischt. Mit der so erhaltenen Emulsion wird nun wie in Beispiel 5 beschrieben verfahren. Die Ergebnisse finden sich in den Tabellen 2-4.

### Vergleichsbeispiel 3

### a) Herstellung der Vernetzerkomponente V3

Die in Beispiel 1 unter a) beschriebene Vorgehensweise wird wiederholt, mit der Abänderung, daß anstelle von Polyvinylalkohol I Polyvinylalkohol II eingesetzt wird. Die erhaltene Emulsion ist laut Zentrifugentest stabil und hat eine mittlere Partikelgröße von 532 nm.

### b) Herstellung der Katalysatorkomponente V2

Die in Beispiel 1 unter b) beschriebene Vorgehensweise wird wiederholt, mit der Abänderung, daß anstelle von Polyvinylalkohol I Polyvinylalkohol II eingesetzt wird. Die erhaltene Emulsion ist laut Zentrifugentest stabil und hat eine mittlere Partikelgröße von 497 nm.

Zur Herstellung der vernetzbaren Emulsion werden 10 Teile Vernetzerkomponente V3, 10 Teile Katalysatorkomponente V2 und 80 Teile Wasser miteinander vermischt. Mit der so erhaltenen Emulsion wird nun wie in Beispiel 5 beschrieben verfahren. Die Ergebnisse finden sich in den Tabellen 2-4.

### Vergleichsbeispiel 4

### a) Herstellung der Vernetzerkomponente V4

Die in Beispiel 1 unter a) beschriebene Vorgehensweise wird wiederholt, mit der Abänderung, daß anstelle von Polyvinylalkohol I Polyvinylalkohol II eingesetzt wird. Die erhaltene Emulsion ist laut Zentrifugentest stabil und hat eine mittlere Partikelgröße von 452 nm.

Zur Herstellung der vernetzbaren Emulsion werden 10 Teile Vernetzerkomponente V4, 10 Teile der in Vergleichsbeispiel 3 unter b) beschriebenen Katalysatorkomponente V2 und 80 Teile Wasser miteinander vermischt. Mit der so erhaltenen Emulsion wird nun wie in Beispiel 5 beschrieben verfahren. Die Ergebnisse finden sich in den Tabellen 2-4.

### Vergleichsbeispiel 5

### a) Herstellung der Vernetzerkomponente V5

Die in Beispiel 5 unter a) beschriebene Vorgehensweise wird wiederholt, mit der Abänderung, daß als Emulgator anstelle der Mischung einer 20 %igen wäßrigen Lösung von 120 Teilen Polyvinylalkohol I und 5 Teilen Nonylphenylpolyglykolether ausschließlich 120 Teile einer 20 %igen wäßrigen Lösung von Polyvinylalkohol II eingesetzt werden. Die erhaltene Emulsion ist laut Zentrifugentest stabil und hat eine mittlere Partikelgröße von 381 nm.

### b) Herstellung der Katalysatorkomponente V3

Die in Beispiel 1 unter b) beschriebene Vorgehensweise wird wiederholt, mit der Abänderung, daß als Emulgator anstelle der Mischung einer 20 %igen wäßrigen Lösung von 120 Teilen Polyvinylalkohol I und 5 Teilen Nonylphenylpolyglykolether ausschließlich 120 Teile einer 20 %igen wäßrigen Lösung von Polyvinylalkohol II eingesetzt werden. Die erhaltene Emulsion ist laut Zentrifugentest stabil und hat eine mittlere Partikelgröße von 487 nm.

Zur Herstellung der vernetzbaren Emulsion werden 10 Teile Vernetzerkomponente V5, 10 Teile Katalysatorkomponente V3 und 80 Teile Wasser miteinander vermischt. Mit der so erhaltenen Emulsion wird nun wie in Beispiel 5 beschrieben verfahren. Die Ergebnisse finden sich in den Tabellen 2-4.

### Vergleichsbeispiel 6

### a) Herstellung der Vernetzerkomponente V6

Die in Beispiel 1 unter a) beschriebene Vorgehensweise wird wiederholt, mit der Abänderung, daß als Emulgator anstelle der Mischung einer 20 %igen wäßrigen Lösung von 120 Teilen Polyvinylalkohol I und 5-Teilen Nonylphenylpolyglykolether ausschließlich 120 Teile einer 20 %igen wäßrigen Lösung von Polyvinylalkohol II eingesetzt werden. Die erhaltene Emulsion ist laut Zentrifugentest stabil und hat eine mittlere Partikelgröße von 395 nm.

Zur Herstellung der vernetzbaren Emulsion werden 10 Teile Vernetzerkomponente V6, 10 Teile der in Vergleichsbeispiel 5 beschriebenen Katalysatorkomponente V3 und 80 Teile Wasser miteinander vermischt. Mit der so erhaltenen Emulsion wird nun wie in Beispiel 5 beschrieben verfahren. Die Ergebnisse finden sich in den Tabellen 2-4.

**Tabelle 2**

| Beispiel | Papier "Buxil N 925" | | | Papier "Hifi Silco 609" | | |
|---|---|---|---|---|---|---|
| | Benetzung | rub off | Shirlastain | Benetzung | rub off | Shirlastain |
| 1 | sehr gut | 1 | 1 | sehr gut | 1 | 1 |
| 5 | sehr gut | 6 | 2-3 | sehr gut | 1 | 1-2 |
| V1 | sehr gut | 1 | 3 | gut | 1 | 2-3 |
| V2 | sehr gut | 1 | 2 | gut | 1 | 3 |
| V3 | sehr gut | 6 | 2-3 | sehr gut | 1 | 2 |
| V4 | sehr gut | 3 | 1 | sehr gut | 1 | 1 |
| V5 | starke Verlaufstörung | 1 | 4 inhomogen | starke Verlaufstörung | 1 | 4 inhomogen |
| V6 | starke Verlaufstörung | 1 | 3-4 inhomogen | starke Verlaufstörung | 1 | 3 inhomogen |

**Tabelle 3**

| Beispiel | Papier "Hifi Silco 691" | | | Papier "Algro Sol 87" | | |
|---|---|---|---|---|---|---|
| | Benetzung | rub off | Shirlastain | Benetzung | rub off | Shirlastain |
| 1 | sehr gut | 1 | 1 | sehr gut | 1 | 1 |
| 5 | sehr gut | 1 | 1 | gut | 1 | 2-3 |
| V1 | gut | 1 | 1-2 | mittel | 1 | 3 inhohomogen |
| V2 | gut | 1 | 2 | gut | 1 | 2-3 inhomogen |
| V3 | gut | 1 | 2-3 | gut | 1 | 3 inhomogen |
| V4 | sehr gut | 1 | 1 | sehr gut | 1 | 1-2 |
| V5 | starke Velaufstörung | 1 | 5 | starke Verlaufstörung | 1 | 5-6 inhomogen |
| V6 | starke Verlaufstörung | 1 | 4 inhomogen | starke Verlaufstörung | 1 | 4 inhomogen |

**Tabelle 4**

| Beispiel | Papier "CMC-3" | | |
|---|---|---|---|
| | Benetzung | rub off | Shirlastain |
| 1 | sehr gut | 1 | 1 |
| 5 | sehr gut | 1 | 1-2 |
| V1 | gut | 1 | 2-3 |
| V2 | gut | 1 | 2 |
| V3 | gut | 1 | 2 |
| V4 | sehr gut | 1 | 1-2 |
| V5 | starke Verlaufstörung | 1 | 5 inhomogen |
| V6 | starke Verlaufstörung | 1 | 3-4 inhomogen |

## Patentansprüche

1. Zusammensetzungen enthaltend Alkylphenylpolyglykolether sowie Polyvinylalkohol mit einem Verseifungsgrad von maximal 85 Mol-% und mit einem Molekulargewicht von 2 000 bis 500 000 g/mol, wobei das Molekulargewicht durch Gelpermeationschromatographie und Laserlichtstreuung bestimmt wird.

2. Zusammensetzung gemäß Anspruch 1, dadurch gekennzeichnet, daß der Polyvinylalkohol einen Verseifungsgrad zwischen 65 und 85 Mol-% aufweist.

3. Zusammensetzung gemäß Anspruch 1 oder 2, dadurch gekennzeichnet, daß es sich bei dem Alkylphenylpolyglykolether um eine Verbindung der allgemeinen Formel
R-(C₆H₄)-O(CH₂CH₂O)ₓH (I),
handelt, worin
R die Bedeutung von Alkylrest mit 4 bis 15 Kohlenstoffatomen hat und
x eine ganze Zahl von 5 bis 30, bevorzugt 10 bis 20, darstellt und
die Phenylgruppe -(C₆H₄)- ortho-, meta- oder para-substituiert sein kann.

4. Zusammensetzung gemäß einem oder mehreren der Ansprüche 1 bis 3, dadurch gekennzeichnet, daß sie Polyvinylalkohol mit niederem Verseifungsgrad und Alkylphenylpolyglykolether im Gewichtsverhältnis von 3:1 bis 6:1 enthält.

5. Wäßrige Emulsionen auf der Basis von Organopolysiloxanen, dadurch gekennzeichnet, daß sie als Emulgator die Zusammensetzungen gemäß einem oder mehreren der Ansprüche 1 bis 4 enthalten.

6. Wäßrige Emulsionen gemäß Anspruch 5, dadurch gekennzeichnet, daß es sich um solche handelt, die durch Anlagerung von Si-gebundenem Wasserstoff an aliphatische Mehrfachbindung vernetzbar sind, enthaltend
(A) Organopolysiloxane, die Reste mit aliphatischen Kohlenstoff-Kohlenstoff-Mehrfachbindungen aufweisen,
(B) Organopolysiloxane mit Si-gebundenen Wasserstoffatomen oder anstelle von (A) und (B)
(C) Organopolysiloxane, die Reste mit aliphatischen Kohlenstoff-Kohlenstoff-Mehrfachbindungen und Si-gebundene Wasserstoffatome aufweisen, und
(D) die Anlagerung von Si-gebundenem Wasserstoff an aliphatische Mehrfachbindung fördernden Katalysator,
(E) erfindungsgemäße Emulgatorkomoination sowie gegebenenfalls
(F) Inhibitor.

7. Wäßrige Emulsionen gemäß Anspruch 6, dadurch gekennzeichnet, daß die Organopolysiloxane (B) einen Wasserstoffgehalt von mindestens einem Gewichtsprozent haben, bezogen auf den Si-gebundenen Wasserstoff.

8. Wäßrige Emulsionen gemäß einem oder mehreren der Ansprüche 5 bis 7, dadurch gekennzeichnet, daß sie Organopolysiloxanharz enthalten.

9. Verfahren zur Herstellung von Elastomeren, dadurch gekennzeichnet, daß die Emulsionen gemäß einem oder mehreren der Ansprüche 6 bis 8 auf ein Substrat aufgetragen und vernetzen gelassen werden.

10. Verfahren nach Anspruch 9, dadurch gekennzeichnet, daß es sich bei den Elastomeren um klebrige Stoffe abweisende Überzüge handelt.

## Claims

1. Composition comprising alkylphenyl polyglycol ethers and polyvinyl alcohol with a degree of hydrolysis of not more than 85 mol-% and with a molecular weight of from 2000 to 500,000 g/mols, the molecular weight being determined by gel permeation chromatography and laser light scattering.

2. Composition according to Claim 1, characterized in that the polyvinyl alcohol has a degree of hydrolysis of between 65 and 85 mol-%.

3. Composition according to Claim 1 or 2, characterized in that the alkylphenyl polyglycol ether is a compound of the general formula
R-(C₆H₄)-O(CH₂CH₂O)ₓH (I),
where
R is an alkyl radical having 4 to 15 carbon atoms and
x is an integer from 5 to 30, preferably from 10 to 20, and
the phenyl group -(C₆H₄)- can be ortho-, meta- or para-substituted.

4. Composition according to one or more of Claims 1 to 3, characterized in that it comprises polyvinyl alcohol with a low degree of hydrolysis and alkylphenyl polyglycol ether in a weight ratio of 3:1 to 6:1.

5. Aqueous emulsion based on organopolysiloxanes, characterized in that it comprises as emulsifier the composition according to one or more of claims 1 to 4.

6. Aqueous emulsion according to Claim 5, characterized in that it is crosslinkable by the addition of Si-bonded hydrogen onto aliphatic multiple bond and comprises
(A) organopolysiloxanes comprising radicals with aliphatic carbon-carbon multiple bonds,
(B) organopolysiloxanes with Si-bonded hydrogen atoms or, instead of (A) and (B),
(C) organopolysiloxanes comprising radicals with aliphatic carbon-carbon multiple bonds and Si-bonded hydrogen atoms, and
(D) catalyst which promotes the addition of Si-bonded hydrogen onto aliphatic multiple bond,
(E) novel emulsifier combination and, if desired,
(F) inhibitor.

7. Aqueous emulsion according to Claim 6, characterized in that the organopolysiloxane (B) has a hydrogen content of at least one percent by weight, based on the Si-bonded hydrogen.

8. Aqueous emulsion according to one or more of Claims 5 to 7, characterized in that it comprises organopolysiloxane resin.

9. Process for preparing elastomers, characterized in that the emulsion according to one or more of Claims 6 to 8 is applied to a substrate and is crosslinking it.

10. Process according to Claim 9, characterized in that the elastomers are coatings which repel tacky substances.

## Revendications

1. Compositions contenant des alkylphénylpolyglycoléthers et un alcool polyvinylique ayant un degré d'hydrolyse d'au maximum 85% en moles et ayant un poids moléculaire de 2 000 à 500 000 g/mol, le poids moléculaire étant déterminé par chromatographie par perméation de gel et diffusion de la lumière laser.

2. Composition selon la revendication 1, caractérisée en ce que l'alcool polyvinylique présente un degré d'hydrolyse compris entre 65 et 85% en moles.

3. Composition selon la revendication 1 ou 2, caractérisée en ce que l'alkylphénylpolyglycoléther est un composé de formule générale
R-(C₆H₄)-O(CH₂CH₂O)ₓH (I),
dans laquelle
R représente un radical alkyle ayant de 4 à 15 atomes de carbone et,
x est un entier de 5 à 30, de préférence de 10 à 20, et
le groupe phényle -(C₆H₄)- peut être substitué en ortho, méta ou para.

4. Composition selon l'une ou plusieurs des revendications 1 à 3, caractérisée en ce qu'elle contient un alcool polyvinylique ayant un faible degré d'hydrolyse et un alkylphénylpolyglycoléther en un rapport pondéral de 3:1 à 6:1.

5. Emulsions aqueuses à base d'organopolysiloxanes, caractérisées en ce qu'elles contiennent, en tant qu'émulsifiant, les compositions selon l'une ou plusieurs des revendications 1 à 4.

6. Emulsions aqueuses selon la revendication 5, caractérisées en ce qu'elles sont telles qu'elles soient réticulables par addition d'hydrogène lié à Si sur une liaison multiple aliphatique, et comprennent
(A) des organopolysiloxanes comprenant des radicaux ayant des liaisons multiples carbone-carbone aliphatiques,
(B) des organopolysiloxanes ayant des atomes d'hydrogène liés à Si, ou, à la place de (A) et (B),
(C) des organopolysiloxanes comprenant des radicaux ayant des liaisons multiples carbone-carbone aliphatiques et des atomes d'hydrogène liés à Si, et
(D) un catalyseur qui favorise l'addition d'hydrogène lié à Si sur une liaison multiple aliphatique,
(E) une combinaison d'émulsifiants selon l'invention et éventuellement
(F) un inhibiteur.

7. Emulsions aqueuses selon la revendication 6, caractérisées en ce que les organopolysiloxanes (B) ont une teneur en hydrogène d'au moins 1 pour cent en poids, par rapport à l'hydrogène lié à Si.

8. Emulsions aqueuses selon l'une ou plusieurs des revendications 5 à 7, caractérisées en ce qu'elles comprennent une résine d'organopolysiloxane.

9. Procédé de préparation d'élastomères, caractérisé en ce que l'on applique les émulsions selon l'une ou plusieurs des revendications 6 à 8 sur un substrat et on les laisse réticuler.

10. Procédé selon la revendication 9, caractérisé en ce que les élastomères sont des revêtements qui repoussent des substances collantes.
